# EUROPÄISCHE PATENTSCHRIFT

(11) **EP 3 376 067 B1**
(45) Veröffentlichungstag und Bekanntmachung des Hinweises auf die Patenterteilung: **10.07.2019**
(21) Anmeldenummer: 18161532.9
(22) Anmeldetag: 13.03.2018
(51) Int. Cl.: F16H 3/091, E01C 23/088

(54) **BODENBEARBEITUNGSMASCHINE MIT SCHALTGETRIEBE ZWISCHEN ANTRIEBSMOTOR UND ROTIERBARER ARBEITSVORRICHTUNG**
SOIL WORKING MACHINE WITH GEAR SPEED CHANGE BETWEEN DRIVE MOTOR AND ROTATABLE WORKING DEVICE
MACHINE DE TRAITEMENT DU SOL POURVUE DE TRANSMISSION ENTRE LE MOTEUR D'ENTRAÎNEMENT ET LE DISPOSITIF DE TRAVAIL ROTATIF

(30) Priorität: 15.03.2017 DE 102017204336
(43) Veröffentlichungstag der Anmeldung: 19.09.2018
(73) Patentinhaber: Wirtgen GmbH, 53578 Windhagen (DE)
(72) Erfinder: Berning, Christian, 53909 Zülpich (DE); Stinner, Tobias, 57635 Weyerbusch (DE); Barimani, Cyrus, 53639 Königswinter (DE); Wilhelmi, Hardy, 53547 Dattenberg (DE)
(74) Vertreter: Ruttensperger Lachnit Trossin Gomoll

(56) Entgegenhaltungen:
- DE-A1- 1 650 676
- DE-A1- 4 128 832
- DE-A1-102009 029 785
- DE-A1-102012 012 738
- DE-A1-102015 210 841

## Beschreibung

Die vorliegende Erfindung betrifft eine Bodenbearbeitungsmaschine gemäß dem Oberbegriff von Anspruch 1.

Eine gattungsgemäße Bodenbearbeitungsmaschine ist beispielsweise aus der DE 10 2012 009 310 A1 bekannt. Diese Druckschrift offenbart eine Bodenbearbeitungsmaschine, wie etwa Straßenfräse, Recycler oder Stabilisierer, dessen Antriebsstrang einenends eine Diesel-Brennkraftmaschine als Antriebsmotor und anderenends eine um eine Fräswalzenachse rotierbare Fräswalze als Arbeitsvorrichtung umfasst. Im Drehmoment-Übertragungsweg zwischen der Brennkraftmaschine und der Fräswalze ist ein Schaltgetriebe angeordnet, welches zwei Schaltstufen aufweist. Jede Schaltstufe umfasst je eine erste Zahnradpaarung auf der Eingangswelle und eine zweite Zahnradpaarung auf der Ausgangswelle, wobei sich die ersten Zahnradpaarungen beider Schaltstufen eingangsseitig ein gemeinsames Antriebsritzel teilen, welches zur gemeinsamen drehzahlgleichen Drehung mit der Antriebswelle der Brennkraftmaschine gekoppelt ist.

Jede Schaltstufe verfügt über eigene Vorgelegewelle. Auf jeder Vorgelegewelle ist jeweils ein mit dem gemeinsamen Antriebsritzel kämmendes Abtriebsritzel der ersten Zahnradpaarung der der Vorgelegewelle zugeordneten Schaltstufe angeordnet und ist jeweils ein Antriebsritzel der zweiten Zahnradpaarung der zugeordneten Schaltstufe angeordnet. Die Antriebsritzel der zweiten Zahnradpaarung der ersten und der zweiten Schaltstufe kämmen jeweils mit einem gesonderten Abtriebsritzel auf einer Ausgangswelle des Getriebes.

Jede der beiden Vorgelegewellen ist als geteilte Vorgelegewelle ausgebildet, deren eingangs- und ausgangsseitige Wellenteile je durch eine schaltbare Kupplung trennbar oder zur gemeinsamen Drehung verbindbar sind, um den Drehmomentübertragungsweg unter Last zwischen beiden Schaltstufen schalten zu können.

Da jede Vorgelegewelle die Eingangswelle des Getriebes mit der Ausgangswelle des Getriebes verbindet, kann sich zu jedem beliebigen Betriebszeitpunkt nur eine der beiden Vorgelege-Kupplungen in einem Drehmoment übertragenden Zustand befinden, während die jeweils andere Vorgelege-Kupplung den Drehmomentübertragungsweg längs ihrer Vorgelegewelle unterbrechen muss.

Das aus der DE 10 2012 009 310 A1 bekannte Getriebe weist außerdem einen Nebenabtrieb auf, an welchem eine Hydraulikpumpe angeschlossen ist, um auch diese über das Getriebe durch die Brennkraftmaschine antreiben zu lassen.

Eine weitere alle Merkmale des Oberbegriffs des Anspruchs 1 aufweisende und daher gattungsgemäße Bodenbearbeitungsmaschine ist aus der DE 10 2012 012 738 A1 bekannt.

Im Gegensatz zur vorgenannten Druckschrift des Standes der Technik findet in der Bodenbearbeitungsmaschine der DE 10 2012 012 738 A1 die Drehmomentübertragung im Schaltgetriebe nicht über eine Vorgelegewelle statt, sondern ausschließlich unmittelbar von einer Eingangswelle des Getriebes zu einer zur Eingangswelle parallelen Ausgangswelle des Getriebes.

Jede Schaltstufe umfasst daher nur jeweils eine Zahnradpaarung, wobei die Eingangswelle des Getriebes beide Antriebsritzel der Zahnradpaarung trägt und die Abtriebswelle die Abtriebsritzel der beiden Zahnradpaarungen trägt. Die Abtriebsritzel auf der Abtriebswelle sind durch eine Klauenkupplung wechselseitig ausschließlich mit der Abtriebswelle zur Drehmoment übertragenden Verbindung koppelbar bzw. entkoppelbar. Es kann auch hier zu jedem Betriebszeitpunkt des bekannten Schaltgetriebes nur eine Zahnradpaarung Drehmoment übertragend mit der Abtriebswelle gekoppelt sein.

Die Eingangswelle des Getriebes durchsetzt das Getriebegehäuse und ragt an ihrem von der Brennkraftmaschine wegweisenden Längsende als Nebenabtrieb aus dem Getriebegehäuse heraus. An diesem Nebenabtrieb, wie auch an einem weiteren Nebenabtrieb ist jeweils eine Hydraulikpumpe zum Antrieb durch den Nebenabtrieb angeschlossen.

Auch die Abtriebswelle ragt an ihrem von der Kopplung mit der Fräswalze entgegengesetzten Längsende aus dem Pumpengehäuse heraus und bildet einen kombinierten Nebenantrieb/Nebenabtrieb. Dieser Nebenantrieb/Nebenabtrieb ist mit einer als Hydraulikmotor betreibbaren Hydraulikpumpe gekoppelt, sodass die Abtriebswelle, dann, wenn eine der beiden Schaltstufen in Betrieb ist, durch die Brennkraftmaschine zur Drehung angetrieben ist und die Brennkraftmaschine somit auch die kombinierte Vorrichtung aus Pumpe/Hydromotor als Hydraulikpumpe antreiben kann.

Die zur Drehmoment übertragenden Kopplung jeweils einer der beiden Schaltstufen verwendete Klauenkupplung kann auch in eine Neutralstellung verbracht werden, in welcher keines der beiden Abtriebsritzel mit der Abtriebswelle Drehmoment übertragend gekoppelt ist. In dieser Neutralstellung kann die kombinierte Hydraulikpumpe/Hydromotor-Vorrichtung als Hydromotor die Abtriebswelle und damit die Fräswalze zu Wartungszwecken zur Drehung antreiben.

Das aus der DE 10 2012 012 738 A1 bekannte Schaltgetriebe ist wegen der Verwendung der Klauenkupplung nicht unter Last schaltbar. Vielmehr muss hier die Last kurzfristig für einen Schaltvorgang unterbrochen werden.

Aus der Figur 12 der US 5 190 398 A ist eine Bodenbearbeitungsmaschine bekannt mit einer Brennkraftmaschine als Antriebsmotor und einer zur Drehung antreibbaren Fräswalze, in deren Antriebsstrang sich ein nicht näher bezeichnetes schaltbares Getriebe befindet.

Das schaltbare Getriebe ist sowohl eingangsseitig wie auch ausgangsseitig jeweils über einen Riementrieb mit der Brennkraftmaschine bzw. der Fräswalze zur Drehmomentübertragung gekoppelt.

Aus der US 2008/0173740 A1 ist eine Bodenbearbeitungsmaschine mit einer Brennkraftmaschine bekannt, von deren Antriebswelle über ein Verteilergetriebe sowohl eine Hydraulikpumpe als auch über einen gesonderten Abtrieb eine Fräswalze zur Drehung angetrieben wird. Zwischen der Brennkraftmaschine und der Fräswalze befindet sich gemäß der Offenbarung der US 2008/0173740 A1 ein als "infinetly variable transmission" (IVT) bezeichnetes stufenloses Getriebe, um die Übertragung von Drehzahl und Drehmoment von der Brennkraftmaschine zur Fräswalze verändern zu können. Anstelle des IVT-Getriebes kann auch ein als CVT ("continuously variable transmission") bezeichnetes stufenlos veränderbares Getriebe oder ein automatisch schaltbares Mehrganggetriebe angeordnet sein.

Aus der DE 10 2012 012 738 A1ist eine Bodenbearbeitungsmaschine mit rotierender Fräswalze als Arbeitsvorrichtung bekannt. Zwischen dem Antriebsmotor und der Arbeitsvorrichtung ist ein Schaltgetriebe mit zwei Schaltstufen bekannt, die mittels einer Klauenkupplung schaltbar sind. Durch die Klauenkupplung kann wahlweise eines von zwei Getriebezahnrädern mit der von der Antriebswelle verschiedenen Abtriebswelle drehfest zur Drehmomentübertragung gekoppelt werden.

Aus der DE 10 2015 219 841 A1 ist ein landwirtschaftliches Zugfahrzeug bekannt, in dessen Fahrantriebsstrang ein zweistufig schaltbares Schaltgetriebe angeordnet ist. Eine erste Schaltstufe ist ein direkter Durchtrieb der Antriebswelle des Antriebsmotors zur koaxialen Abtriebswelle des Schaltgetriebes. Eine zweite Schaltstufe wird durch eine Vorgelegewelle erzielt, die Drehmoment von der Antriebswelle des Antriebsmotors auf die Abtriebswelle des Schaltgetriebes übersetzend überträgt.

Nachteilig an den gattungsgemäßen Bodenbearbeitungsmaschinen mit unterschiedlichen Zahnradpaarungen ist, dass die Zahnradpaarungen des Schaltgetriebes, welche üblicherweise die von der Brennkraftmaschine gelieferte Leistung drehzahlmäßig untersetzen und drehmomentmäßig übersetzen, je nach Betriebsdauer der einzelnen Schaltstufen unterschiedlich stark verschleißen. Daher fällt entweder eine erhöhte Anzahl an Wartungsvorgängen an, um einmal Zahnräder der einen Schaltstufe und ein weiteres Mal Zahnräder der anderen Schaltstufe zu warten bzw. auszutauschen, oder es werden bei einem Wartungsvorgang stets die Zahnräder aller Schaltstufen ausgetauscht, obwohl manche darunter aufgrund ihres Verschleißbildes ohne Weiteres weiter betrieben werden könnten.

Es ist daher Aufgabe der vorliegenden Anmeldung, die eingangs genannte Bodenbearbeitungsmaschine derart weiterzubilden, dass es möglich wird, den Antriebsmotor möglichst resourcenschonend und daher stationär in einem optimalen Drehzahlbereich mit möglichst konstanter Drehzahl zu betreiben und dennoch dessen Antriebsleistung in unterschiedlichen Drehzahl-Drehmoment-Kombinationen mit hoher Betriebssicherheit zur Arbeitsvorrichtung hin übertragen zu können, ohne hierbei Abschnitte des Antriebsstrangs unterschiedlich stark zu belasten und somit unterschiedlichen Verschleiß zu bewirken.

Diese Aufgabe wird erfindungsgemäß gelöst durch eine Bodenbearbeitungsmaschine mit allen Merkmalen des Anspruchs 1. Bei dieser Bodenbearbeitungsmaschine ist mittels einer ersten Schaltstufe des Schaltgetriebes eine eingangsseitig mit dem Antriebsmotor gekoppelte Eingangswelle des Schaltgetriebes unmittelbar mit einer ausgangsseitig mit der Arbeitsvorrichtung gekoppelten Ausgangswelle des Schaltgetriebes zur gemeinsamen drehzahlgleichen Drehbewegung Drehmoment übertragend verbindbar. Mittels einer zweiten Schaltstufe des Schaltgetriebes ist die Eingangswelle unter Zwischenanordnung einer Getriebeanordnung mit der Ausgangswelle zur gemeinsamen drehzahlverschiedenen Drehbewegung Drehmoment übertragend verbindbar.

Durch die besondere Konstruktion der erfindungsgemäßen Bodenbearbeitungsmaschine wird also entweder in einer ersten Schaltstufe die Antriebswelle des Antriebsmotors fest zur gemeinsamen drehzahlgleichen Rotation mit der mit der Arbeitsvorrichtung gekoppelten Ausgangswelle des Schaltgetriebes gekoppelt, - dies ist in der vorliegenden Anmeldung als "Durchtrieb" bezeichnet - oder die Antriebswelle und die daran abgreifbare Leistung des Antriebsmotors wird in der zweiten Schaltstufe unter Veränderung von Drehzahl und Drehmoment durch die Getriebeanordnung mit der mit der Arbeitsvorrichtung gekoppelten Ausgangswelle des Schaltgetriebes gekoppelt.

Somit befinden sich bei den hier betrachteten zwei Schaltstufen entweder alle an einer Drehzahl und Drehmoment verändernden Leistungsübertragung beteiligten Bauteile der Getriebeanordnung im leistungsübertragenden Pfad vom Antriebsmotor zur Arbeitsvorrichtung oder keines davon. Somit verschleißen alle an einer Drehzahl- und Drehmomentveränderung beteiligten Bauteile der Getriebeanordnung gleichmäßig, da gemäß vorliegender Erfindung nicht zwischen zwei unterschiedlich Drehmoment übertragenden Getriebesätzen geschaltet wird, sondern zwischen einem Durchtrieb, welcher ohne Getriebeanordnung auskommt, und einer Drehzahl und Drehmoment verändernden Getriebeanordnung.

Aufgrund der besonderen Konstruktion des erfindungsgemäßen Getriebes hat dieses gegenüber dem Stand der Technik außerdem eine erhöhte Ausfallsicherheit. Selbst wenn nämlich die Getriebeanordnung Schaden nehmen sollte, kann die Arbeitsvorrichtung immer noch mittels der ersten Schaltstufe, die die Eingangs- und die Ausgangswelle unmittelbar verbindet, weiter betrieben werden. Die Drehzahl der Arbeitsvorrichtung ist dann möglicherweise für eine zu erledigende Bearbeitungsanwendung nicht optimal. Dennoch ist in vielen Fällen eine Bodenbearbeitung mit einer mit suboptimaler Arbeitsgeschwindigkeit angetriebenen Arbeitsvorrichtung einem Totalausfall der Bodenbearbeitungsmaschine vorzuziehen.

Neben der höheren Ausfallsicherheit ergibt sich aus der Struktur des Schaltgetriebes der erfindungsgemäßen Bodenbearbeitungsmaschine noch ein weiterer Vorteil eines erhöhten Wirkungsgrads. Selbst bei formschlüssig Drehmoment übertragenden Getriebemitteln, wie Zahnrädern, sind lastabhängige Verlustanteile unvermeidlich. Bei einer Verzahnung machen die lastabhängigen Verluste einen erheblichen Anteil, etwa zwischen 85 % und 99 %, an der Gesamtverlustleistung aus. Die erste Schaltstufe mit einer unmittelbaren Kopplung von Eingangswelle und Ausgangswelle des Schaltgetriebes, da sie ohne Drehmomentübersetzung oder/und -untersetzung auskommt, kann daher mit erheblich verringerten lastabhängigen Verlusten betrieben werden, verglichen mit den Zahnrad-Getriebestufen des Standes der Technik

Vorliegend soll, wie unten ausgeführt werden wird, nicht ausgeschlossen sein, dass das Schaltgetriebe der erfindungsgemäßen Bodenbearbeitungsmaschine neben den genannten Abtrieben weitere Nebenabtriebe aufweist. Daher sei nachfolgend die mit dem Antriebsmotor gekoppelte Eingangswelle des Schaltgetriebes als "Hauptantrieb" des Schaltgetriebes bezeichnet. Ebenso ist der mit der Arbeitsvorrichtung gekoppelte Abtrieb des Schaltgetriebes als "Hauptabtrieb" bezeichnet.

Wenngleich der Antriebsmotor ganz grundsätzlich ein auf beliebigen physikalischen Wirkprinzipien beruhender Antriebsmotor sein kann, sind die Vorteile der vorliegenden Erfindung bei Verwendung einer Brennkraftmaschine, insbesondere Diesel-Brennkraftmaschine, als Antriebsmotor in besonderem Maße nutzbar, da der durch die vorliegende Erfindung ermöglichte weitestgehend drehzahlstationäre Betrieb des Antriebsmotors bei gleichzeitig verschiedenen verwendbaren Drehzahl/Drehmomentpaarungen der Arbeitsvorrichtung sowohl zur Verringerung des Kraftstoffbedarfs als auch zur Schadstoffminderung führt.

Da die Antriebsleistung das Produkt aus Drehzahl und Drehmoment der die Antriebsleistung übertragenden Bauteile ist, kann ein und dieselbe Antriebsleitung durch verschiedene Drehzahl/Drehmomentpaarungen realisiert werden, die dasselbe Produkt aufweisen.

Mit der Verwendung eines Durchtriebs als Schaltstufe, bei welcher eine durchgehende körperliche Verbindung zwischen Hauptantrieb und Hauptabtrieb geschaffen wird, kommt die vorliegende Anmeldung verglichen mit dem eingangs genannten gattungsgemäßen Stand der Technik außerdem mit weniger Bauteilen bzw. mit weniger bewegten Bauteilen im Schaltgetriebe aus, was zusätzlich die Robustheit des Schaltgetriebes fördert. Nicht nur sind die beteiligten Bauteile, wie oben beschrieben, gleichmäßig belastet, was ihre belastungsgerechte Auslegung erleichtert, und ihre jeweilige Bauteil-Standfestigkeit erhöht. Wie oben beschrieben, ist auch die Ausfallsicherheit der Bodenbearbeitungsmaschine insgesamt erhöht, da sie mit dem hochrobusten und wegen der zu seiner Bildung ausreichenden geringen Bauteileanzahl kaum fehleranfälligen Durchtrieb auch dann betrieben werden kann, wenn sich an der zweiten Schaltstufe ein Defekt einstellen sollte, und das sogar bei verglichen mit einer Zahnradpaarung oder allgemein mit einer Drehmomentuntersetzung oder -übersetzung höherem Wirkungsgrad.

Dafür ist der Konstrukteur nicht frei in der Wahl der Übertragungsverhältnisse von zwei Schaltstufen, sondern nur von einer. Dieser Nachteil kann aber zur Erzielung der oben genannten Vorteile in Kauf genommen werden, da vor allem im erfindungsgemäßen Fall einer Brennkraftmaschine als Antriebsmotor und einem Bodenmaterial abtragenden Fräswerkzeug, wie etwa Fräswalze oder Fräsrotor, die im Vergleich zur Betriebsdrehzahl des Fräswerkzeugs hohe Drehzahl der Brennkraftmaschine durch wenigstens ein weiteres Getriebe unter Erhöhung des übertragenen Drehmoments reduziert wird. Unter Einbeziehung eines solchen weiteren Getriebes kommt es weniger auf die absoluten Werte der Übertragungsverhältnisse der beiden Schaltstufen des Schaltgetriebes an als auf deren Verhältnis zueinander. Das wenigstens eine weitere Getriebe kann in seinem Übertragungsverhältnis an die Übertragungsverhältnisse des Schaltgetriebes so ausgelegt werden, dass die resultierenden Gesamtübertragungsverhältnisse aller zwischen Antriebsmotor und Arbeitsvorrichtung angeordneten Getriebe gewünschte Werte annehmen.

Um den von der ersten Schaltstufe gebildeten Durchtrieb gezielt aktivieren und deaktivieren zu können, kann gemäß einer vorteilhaften Weiterbildung der vorliegenden Erfindung vorgesehen sein, dass die erste Schaltstufe eine Durchtrieb-Kupplung umfasst, mit welcher die Eingangswelle abhängig vom Schaltzustand der Durchtrieb-Kupplung unmittelbar mit der Ausgangswelle zur gemeinsamen drehzahlgleichen Drehung verbindbar ist oder von der Ausgangswelle trennbar ist. Ein bei der Übertragung von Drehmoment über die eingerückte Durchtrieb-Kupplung möglicherweise auftretender geringer Schlupf ist im Vergleich mit üblichen durch Getriebeanordnungen erreichten und erreichbaren Übertragungsverhältnissen vernachlässigbar und soll daher zur Beurteilung der Drehzahlgleichheit der durch die Durchtrieb-Kupplung hergestellten unmittelbaren Verbindung von Eingangswelle und Ausgangswelle außer Betracht bleiben.

Nicht nur die erste Schaltstufe muss gezielt aktivierbar und deaktivierbar sein, sondern auch die zweite Schaltstufe. Die wahlweise Aktivierung oder Deaktivierung der zweiten Schaltstufe kann konstruktiv in vorteilhafter Weise dadurch realisiert sein, dass die zweite Schaltstufe eine Vorgelegewelle umfasst, welche mit der Eingangswelle über eine erste Teil-Getriebeanordnung der Getriebeanordnung verbunden ist und welche mit der Ausgangswelle über eine zweite Teil-Getriebeanordnung der Getriebeanordnung verbunden ist, wobei die zweite Schaltstufe weiter eine Vorgelege-Kupplung umfasst, mit welcher eine Drehmomentübertragung von der Eingangswelle zur Ausgangswelle über die Vorgelegewelle abhängig vom Schaltzustand der Vorgelege-Kupplung herstellbar oder unterbrechbar ist.

Somit wird über die erste Teil-Getriebeanordnung Drehmoment von der Eingangswelle zur Vorgelegewelle hin übertragen und mit der zweiten Teil-Getriebeanordnung wird Drehmoment von der Vorgelegewelle auf die Ausgangswelle des Schaltgetriebes übertragen. Die Vorgelege-Kupplung kann grundsätzlich an einer beliebigen Stelle längs des Drehmoment-Übertragungswegs zwischen erster und zweiter Teil-Getriebeanordnung angeordnet sein. Sie kann sogar im Drehmoment-Übertragungsweg an der Eingangswelle oder an der Ausgangswelle vorgesehen sein, etwa zur Herstellung und Unterbrechung einer Drehmomentübertragung zwischen einer der Wellen aus Eingangswelle und Ausgangswelle und einem Drehmoment übertragenden Bauteil der ersten bzw. der zweiten Teil-Getriebeanordnung. Aus Gründen einer möglichst effizienten Ausnutzung des vorhandenen Bauraums ist jedoch eine Anordnung der Vorgelege-Kupplung an der Vorgelegewelle bevorzugt. So können die Durchtriebs- und die Vorgelege-Kupplung mit ausreichendem Abstand voneinander angeordnet sein.

Eine im Vergleich zu einer räumlich zwischen den Teil-Getriebeanordnungen angeordneten Vorgelege-Kupplung vereinfachte Lagerung der Vorgelegewelle ergibt sich dann, wenn die Vorgelege-Kupplung zwischen einem Bauteil einer der Teil-Getriebeanordnungen und der Vorgelegewelle selbst angeordnet ist, da dann die Vorgelegewelle mit einem ungeteilten Wellenkörper zur Drehung gelagert werden kann. Die Lagerung von zwei Teil-Vorgelegewellen einer geteilten Vorgelegewelle kann dadurch vermieden werden.

Gemäß der vorliegenden Erfindung weist die Bodenbearbeitungsmaschine im Drehmomentübertragungspfad vom Schaltgetriebe bis zur Arbeitsvorrichtung - die genannten Grenzen des Pfads jeweils eingeschlossen - eine Bremsvorrichtung auf, durch welche die Arbeitsvorrichtung bei unterbrochenem Drehmomentübertragungspfad zur Vermeidung einer Übertragung unerwünschter Schleppmomente stillsetzbar ist.

Dergleichen Schleppmomente können beispielsweise an gelüfteten Kupplungen, wie der Durchtrieb-Kupplung oder/und der Vorgelege-Kupplung entstehen, wenn antriebs- und abtriebsseitige Kupplungsteile trotz des Lüftungszustands, in dem idealerweise kein Drehmoment über die Kupplung übertragbar sein soll, in Reibkontakt stehen.

Wenngleich die Bremsvorrichtung grundsätzlich an beliebiger Stelle im genannten Drehmomentübertragungspfad angeordnet sein kann, ist die Bremsvorrichtung zur bestmöglichen Bauraumausnutzung im Schaltgetriebe angeordnet. Für eine bestmögliche Funktionserfüllung wirkt die Bremsvorrichtung bevorzugt mit einem stets gemeinsam mit der Ausgangswelle drehenden Getriebeteil, einschließlich der Ausgangswelle selbst, zusammen. Dabei hat sich unter Berücksichtigung des verfügbaren Bauraums ein Zusammenwirken mit einem abtriebsseitigen Bauteil der Vorgelege-Kupplung bewährt. Bei entsprechender Wahl des Übertragungsverhältnisses der zweiten Teil-Getriebeanordnung kann dort eine Stilllegung der Arbeitsvorrichtung mit geringerer Bremskraft als an der Ausgangswelle erreicht werden. Es sollen jedoch auch andere Orte des Zusammenwirkens von Bremsvorrichtung und Schaltgetriebeteilen nicht ausgeschlossen sein. So kann beispielsweise ebenso eine Bremsscheibe der Bremsvorrichtung auf der Ausgangswelle zur gemeinsamen Drehung mit dieser gelagert sein.

Wenngleich daran gedacht sein kann, die gesamte Veränderung von Drehzahl und Drehmoment der zweiten Schaltstufe in nur einer der beiden Teil-Getriebeanordnungen zu leisten, ist dies aus Gründen einer dadurch resultierenden unterschiedlichen Belastung von Bauteilen der beiden Teil-Getriebeanordnungen nicht bevorzugt. Eine ausgewogenere Belastung der an den jeweiligen Teil-Getriebeanordnungen beteiligten Bauteile ist dadurch grundsätzlich möglich, dass die erste Teil-Getriebeanordnung und die zweite Teil-Getriebeanordnung jeweils ein von 1 verschiedenes Übertragungsverhältnis aufweisen.

Dabei ist eine möglichst gleichmäßig auf beide Teil-Getriebeanordnungen aufgeteilte Belastung bei der Übertragung von Drehzahl und Drehmoment über die zweite Schaltstufe in vorteilhafter Weise dadurch möglich, dass sich das Übertragungsverhältnis der ersten Teil-Getriebeanordnung und das Übertragungsverhältnis der zweiten Teil-Getriebeanordnung bezogen auf das größere der beiden Übertragungsverhältnisse um nicht mehr als 3 %, bevorzugt um nicht mehr als 1,5 %, besonders bevorzugt um nicht mehr als 0,75 % unterscheiden.

Höchst bevorzugt sind Teil-Getriebeanordnungen, deren Übertragungsverhältnisse sich um nicht mehr als 0,3 bis 0,4 % unterscheiden. Auch dies ist konstruktiv möglich, wie weiter unten im Detail gezeigt werden wird.

Grundsätzlich können die beiden Teil-Getriebeanordnungen durch beliebige Getriebebauteile realisiert sein, welche eine Übertragung von Drehzahl und Drehmoment unter Veränderung von Drehzahl und Drehmoment gestatten. Beispielsweise kann eine der Teil-Getriebeanordnungen oder können beide Teil-Getriebeanordnungen einen Riemen- oder einen Kettentrieb aufweisen, um Drehzahl und Drehmoment zu übertragen. Aufgrund des bei hoher übertragener Leistung verhältnismäßig geringen beanspruchten Bauraums ist es jedoch bevorzugt, wenn die erste Teil-Getriebeanordnung eine erste Zahnradpaarung ist und wenn die zweite Teil-Getriebeanordnung eine zweite Zahnradpaarung ist.

Grundsätzlich kann daran gedacht sein, dass die beiden Teil-Getriebeanordnungen identische Zahnradpaarungen und somit ein identisches Übertragungsverhältnis verwenden. Dies hat den Vorteil, dass beide Teil-Getriebeanordnungen mit jeweils einem identischen Zahnradsatz ausgerüstet sein können, was die Bauteilevarianz in vorteilhafter Weise gering hält. Sofern die Verwendung identischer Zahnradpaarungen etwa aus Gründen des zur Verfügung stehenden Bauraums ausscheidet, ist aus Gründen einer gleichmäßigen Belastung der beiden Teil-Getriebeanordnungen bevorzugt, wenn die Übertragungsverhältnisse der ersten und der zweiten Teil-Getriebeanordnung einen lediglich geringen Unterschied aufweisen. Mit als Zahnradpaarungen ausgebildeten Teil-Getriebeanordnungen kann dies in vorteilhafter Weise dadurch realisiert sein, dass sich die Zähnezahlen der kleineren Zahnräder der ersten und der zweiten Zahnradpaarung um nicht mehr als zwei Zähne unterscheiden und dass sich die Zähnezahlen der größeren Zahnräder der ersten und der zweiten Zahnradpaarung um nicht mehr als zwei Zähne unterscheiden.

Wie an sich bekannt ist, kann die Funktion des mit vorliegender Anmeldung vorgestellten Schaltgetriebes über die bloße Übertragung von Leistung vom Antriebsmotor zur Arbeitsvorrichtung hinausreichen. Beispielsweise kann dieses Schaltgetriebe Teil eines Verteilergetriebes sein, an welchem an mehreren Stellen Leistung abgreifbar ist. Hierzu ist in einer bevorzugten Weiterbildung der vorliegenden Erfindung vorgesehen, dass das Schaltgetriebe wenigstens einen, vorzugsweise mehr als einen, Nebenabtrieb aufweist.

Dann, wenn das Schaltgetriebe der erfindungsgemäßen Bodenbearbeitungsmaschine mehr als einen Nebenabtrieb aufweist, sollte vorteilhafterweise sichergestellt sein, dass unabhängig von der Aktivierung der ersten oder der zweiten Schaltstufe stets alle Nebenabtriebe zur Drehung angetrieben sind. Dies kann erreicht werden, indem alle Nebenabtriebe des Schaltgetriebes über dieselbe Teil-Getriebeanordnung zur Drehung angetrieben sind.

Dies ist vorteilhafterweise die erste Teil-Getriebeanordnung, welche direkt über die Eingangswelle des Schaltgetriebes angetrieben ist, da das auf der Eingangswelle des Schaltgetriebes sitzende Antriebsritzel der ersten Teil-Getriebeanordnung in der Regel stets dreht und die Durchtrieb-Kupplung erst hinter dem ersten Antriebsritzel angeordnet ist. Somit sind bevorzugt alle Nebenabtriebe des Schaltgetriebes über die erste Teil-Getriebeanordnung zur Drehung angetrieben. Zwar wird in diesem Fall auch dann Drehmoment über die erste Teil-Getriebeanordnung übertragen, wenn die erste Schaltstufe aktiviert und die zweite Schaltstufe deaktiviert ist. Allerdings ist die zu etwaigen Nebenabtrieben übertragene Leistung um Größenordnungen geringer als die zwischen Hauptantrieb und Hauptabtrieb übertragene Leistung, so dass sie für die Auslegung des Schaltgetriebes eine erheblich geringere Relevanz besitzt als die zum Hauptabtrieb übertragene Leistung.

Wie an sich bekannt ist und wie oben bereits dargelegt wurde, ist die Arbeitsvorrichtung in der Regel nicht unmittelbar mit der Ausgangswelle des Schaltgetriebes zur Drehung gekoppelt. Vielmehr erfolgt zwischen dem Schaltgetriebe und der Arbeitsvorrichtung eine weitere Übertragung der Antriebsleistung unter Veränderung von Drehzahl und Drehmoment. Bevorzugt ist die Ausgangswelle unter Zwischenanordnung wenigstens eines weiteren Getriebes mit der Arbeitsvorrichtung Drehmoment übertragend gekoppelt.

Wie sich in der Vergangenheit bewährt hat, sind zwischen dem Hauptabtrieb des Schaltgetriebes und der Arbeitsvorrichtung bevorzugt wenigstens zwei Getriebe vorgesehen, von welchen eines ein Riementrieb und ein weiteres eine Planetengetriebeanordnung sein kann. Beide übertragen wenigstens Antriebsleistung, wobei zur bloßen Leistungsübertragung eine Veränderung der jeweils eingangs- und ausgangsseitigen Drehzahl/Drehmomentwertepaarungen hinzutreten kann. Letzteres, also ein von 1 verschiedenes Übertragungsverhältnis, wird beim Planetengetriebe stets der Fall sein. Beim Riementrieb kann dies der Fall sein. Dabei bietet insbesondere die Planetengetriebeanordnung die Möglichkeit, hohe Übertragungsverhältnisse in verhältnismäßig geringem Bauraum unterzubringen. Ein Riementrieb hingegen gestattet die Überbrückung auch großer Abstände zwischen Eingangs- und Ausgangswelle, was den Freiheitsgrad der Anordnung der Antriebsbauteile: Antriebsmotor mit schaltbarem Getriebe und Arbeitsvorrichtung mit gegebenenfalls weiter vorgeschaltetem Getriebe, erhöht.

Beispielsweise kann die zweite Schaltstufe des schaltbaren Getriebes ein Drehmoment-Übertragungsverhältnis von der Eingangs- zur Ausgangsseite von zwischen 0,6 und 0,9, bevorzugt von zwischen 0,7 und 0,85, besonders bevorzugt von etwa 0,75 aufweisen. Diese Werte stellen jedoch nur beispielhafte Größen dar. Sie hängen für eine konkrete Bodenbearbeitungsmaschine ab von dem verwendeten Antriebsmotor und seiner Betriebscharakteristik, von dem gewünschten Drehzahlbereich der Arbeitsvorrichtung, und von weiteren zwischen Antriebsmotor und Arbeitsvorrichtung realisierten Übertragungsverhältnissen im Antriebsstrang.

Im erfindungsgemäßen Fall eines rotierenden Fräswerkzeugs als der Arbeitsvorrichtung ist deren gewünschter Arbeits-Drehzahlbereich von ihrem Schnittkreisdurchmesser und ihren bestimmungsgemäßen Einsatzfällen abhängig. Die Bodenfräsmaschine kann dann, wenn ihre Arbeitsvorrichtung - wie bevorzugt - auswechselbar an der Bodenbearbeitungsmaschine vorgesehen ist, mit unterschiedlichen Arbeitsvorrichtungen unterschiedliche Aufgaben erfüllen, die gerade dann unterschiedliche Drehzahlen erfordern, wenn die unterschiedlichen Arbeitsvorrichtungen im Wesentlichen gleichen Durchmesser bzw. gleichen Wirkdurchmesser aufweisen. Am bevorzugten Ausführungsbeispiel einer Fräswalze kann die Bodenbearbeitungsmaschine mittels Fräswerkzeuge tragender auswechselbarer Fräswalzen verschiedene Aufgaben, wie z. B. Feinfräsen (abtragen der obersten Schicht des Straßenbelags), oder den Ausbau kompletter Schichten des Straßenaufbaus übernehmen. Da hier das ordnungsgemäße Funktionieren des Schicht abtragenden Fräswerkzeugs im Fokus steht, ist für die jeweilige Anwendung die Schnittgeschwindigkeit des Fräswerkzeugs als Beispiel einer allgemeinen Wirkgeschwindigkeit entscheidend, also etwa die Bahngeschwindigkeit einer Fräsmeißelspitze längs ihrer Umläufe um die Fräswalzenachse. Für die unterschiedlichen Anwendungen sind jeweils andere Schnitt-Geschwindigkeiten der Fräswerkzeuge vorteilhaft. So wird beim Feinfräsen eine hohe Schnittgeschwindigkeit angestrebt um ein möglichst homogenes Fräsbild zu erzeugen, während beim Ausbau kompletter Schichten eine möglichst langsame Schnittgeschwindigkeit angestrebt wird, um den Verschleiß der Fräswerkzeuge zu reduzieren. In der praktischen Anwendung haben sich für unterschiedliche Fräsanwendungen Schnittgeschwindigkeiten im Bereich von 3 bis 8 m/s bewährt. Dabei haben üblicherweise die an einer Bodenfräsmaschine zum Einsatz kommenden Arbeitsvorrichtungen im Wesentlichen gleiche Schnittkreisdurchmesser. Diese unterscheiden sich in der Regel um nicht mehr als 5 %, bezogen auf den jeweils größten verfügbaren Schnittkreisdurchmesser.

Es soll jedoch nicht ausgeschlossen sein, dass sich die Wirkkreisdurchmesser von unterschiedlichen auswechselbaren Arbeitsvorrichtungen unterscheiden, obwohl sie gleichen Aufgaben bzw. Anwendungen zugeordnet sind. Auch dann werden an der Arbeitsvorrichtung abhängig von ihrem jeweiligen Wirkkreisdurchmesser unterschiedliche Drehzahlen benötigt, um zu jeweils gleichen Wirkgeschwindigkeiten (Bahngeschwindigkeit) von Arbeitswerkzeugen der Arbeitsvorrichtung zu gelangen, die den Wirkkreisdurchmesser definieren.

Unter beispielhafter Zugrundelegung eines Ziel-Wirkgeschwindigkeitsbereichs, insbesondere eines Ziel-Schnittgeschwindigkeitsbereichs, kann der Konstrukteur bei bekanntem Betriebspunkt des Antriebsmotors und bekanntem Wirkdurchmesser der Arbeitsvorrichtung, insbesondere Durchmesser des Schnittkreises der Fräswalze, den Antriebsstrang mit dem Schaltgetriebe so auslegen, dass mit beiden Schaltstufen jeweils unterschiedliche Wirkgeschwindigkeiten erzielbar sind, die mit gewünschtem Abstand voneinander (Spreizung) beide im Ziel-Wirkgeschwindigkeitsbereich gelegen sind.

Sofern der bevorzugt genannte Riementrieb zwischen dem Schaltgetriebe und der Arbeitsvorrichtung vorgesehen ist, weist dieser ebenso bevorzugt ein DrehmomentÜbertragungsverhältnis von der Eingangsseite zur Ausgangsseite von 0,6 bis 1 auf. Üblicherweise ist die Ausgestaltung des Riementriebs eher durch den zu seiner Unterbringung verfügbaren Bauraum getrieben als durch ein mit dem Riementrieb zu erzielendes Übertragungsverhältnis.

Dann, wenn als Antriebsmotor eine Brennkraftmaschine, insbesondere eine Diesel-Brennkraftmaschine, verwendet wird, dreht diese im bevorzugten stationären Bereich mit einer Drehzahl im Bereich von etwa zwischen 1.000 bis 2.500 U/min, insbesondere zwischen 1.300 und 2.000 U/min. Am gesamten Antriebsstrang der Arbeitsvorrichtung ist dann, wenn die Arbeitsvorrichtung - wie es für die vorliegende Erfindung vorgesehen ist - ein um eine Fräswerkzeugachse drehbares Fräswerkzeug, wie etwa Fräswalze oder Fräsrotor, ist, eine Übertragung der Antriebsleistung der Brennkraftmaschine zur Arbeitsvorrichtung unter Drehzahlreduzierung und Drehmomenterhöhung wünschenswert.

Sofern nach dem Riemenantrieb ein weiteres Getriebe zwischen Fräswalze und Riementrieb zwischenangeordnet ist, kann dieses bevorzugt als Planetengetriebeanordnung ausgebildetes Getriebe beispielsweise ein Drehmoment-Übertragungsverhältnis von der Eingangsseite zur Ausgangsseite von mehr als 8, vorzugsweise von mehr als 13 aufweisen, jedoch von weniger als 28, bevorzugt von weniger als 23 aufweisen. Auch die Auslegung des weiteren Getriebes unterliegt den oben im Zusammenhang mit der Auslegung des Schaltgetriebes vorgestellten Randbedingungen. Der Antriebsstrang insgesamt soll ausgehend von einer bekannten optimalen Antriebsmotor-Drehzahl und bekannten Abmessungen der Arbeitsvorrichtung Betriebsdrehzahlen der Arbeitsvorrichtung mit vorgegebener Spreizung in einem wie oben dargelegt ermittelten Drehzahlbereich ermöglichen.

Zur Wartung der Arbeitsvorrichtung ist der Antriebsstrang zwischen Ausgangswelle des Schaltgetriebes und Arbeitsvorrichtung bevorzugt zur vorübergehenden Ankopplung eines Hilfsantriebs ausgebildet. Wegen ihrer einfachen Zugänglichkeit ist bevorzugt eine der Riemenscheiben des Riementriebs zur Hilfsantriebsankopplung ausgebildet, etwa durch Ausbildung einer entsprechenden Kopplungsformation daran.

Die erfindungsgemäße Bodenbearbeitungsmaschine kann eine Straßenfräse, ein Surface Miner, ein Bodenstabilisierer oder ein Recycler sein.

Die vorliegende Erfindung wird nachfolgend anhand der beiliegenden Zeichnungen näher erläutert werden. Es stellt dar:
- Figur 1: eine beispielhafte Ansicht einer erfindungsgemäßen Ausführungsform einer Bodenbearbeitungsmaschine der vorliegenden Anmeldung,
- Figur 2: eine schematische Blockansicht eines Antriebsstrangs der Bodenbearbeitungsmaschine von Figur 1,
- Figur 3: eine schematische Darstellung einer ersten Ausführungsform des Schaltgetriebes aus dem Antriebsstrang von Figur 2, und
- Figur 4: eine schematische Darstellung einer zweiten Ausführungsform des Schaltgetriebes aus dem Antriebsstrang von Figur 2.

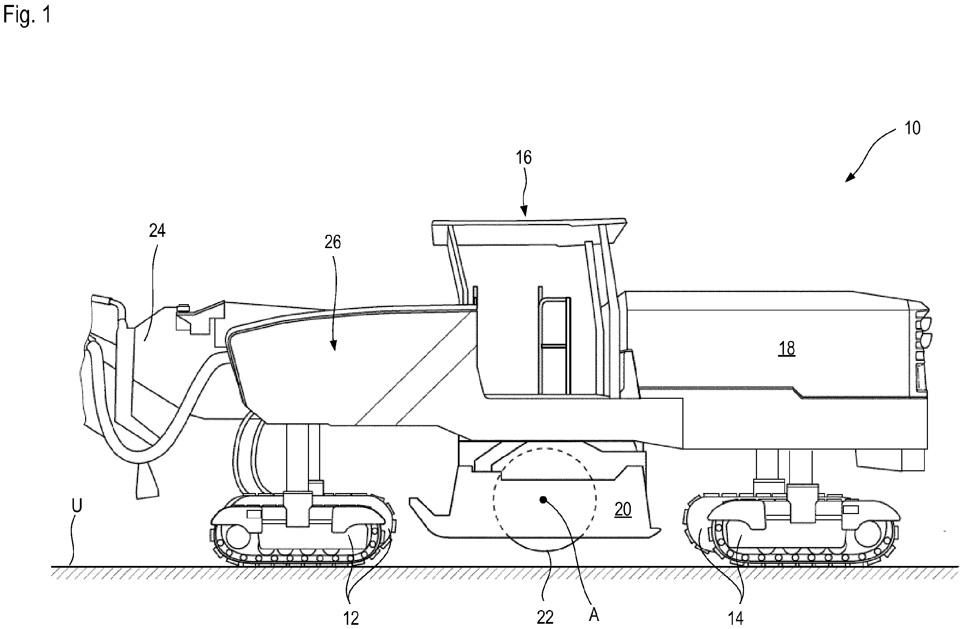

In Figur 1 ist eine erfindungsgemäße Bodenbearbeitungsmaschine allgemein mit 10 bezeichnet. Die im vorliegenden Beispiel als Straßengroßfräse ausgebildete Bodenbearbeitungsmaschine 10 steht auf dem Untergrund U auf, der durch sie bearbeitet werden soll. Hierzu weist die Straßengroßfräse vordere 12 und hintere 14 Laufwerke auf, die als Räder oder Kettenfahrwerke ausgebildet sein können, die an sich bekannt sind und auf die hier nicht weiter eingegangen werden soll.

Die Straßengroßfräse 10 weist einen Fahrstand 16 auf, von welchem aus die Straßengroßfräse 10 steuerbar und bedienbar ist.

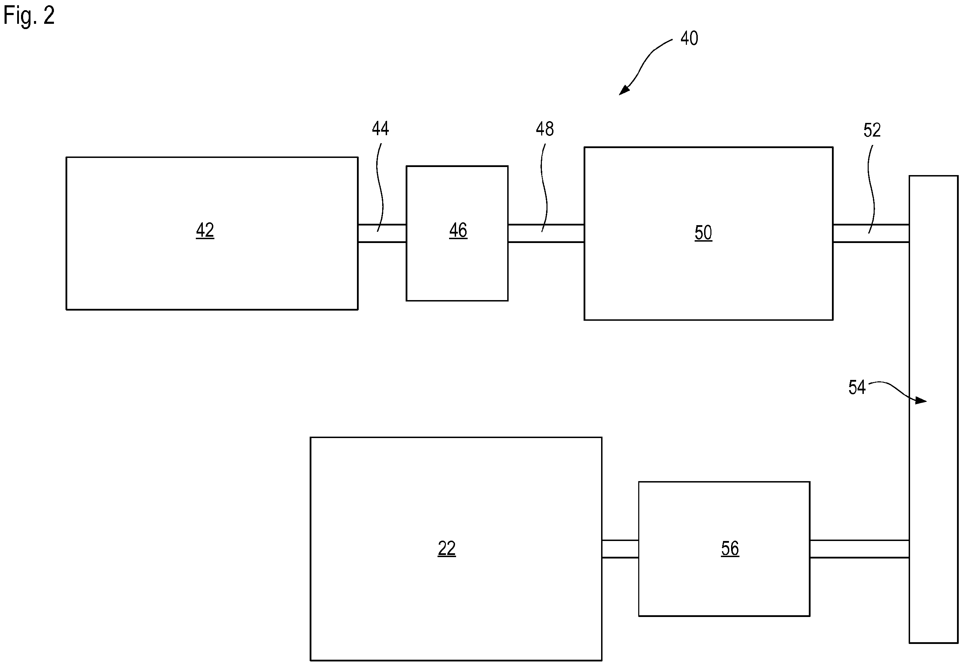

Im Bereich hinter dem Fahrstand 16, also zwischen Fahrstand 16 und dem Heck der Straßengroßfräse 10 befindet sich ein Motorraum 18, in welchem eine im Zusammenhang mit Figur 2 näher erläuterte Brennkraftmaschine 42 angeordnet ist, die eine Antriebsleistung zum Antrieb und zum Betrieb der Straßengroßfräse 10 bereitstellt.

Im Bereich unter dem Fahrstand 16 und in Maschinenlängsrichtung zwischen den vorderen und den hinteren Fahrwerken 12 bzw. 14 befindet sich ein Fräswalzenkasten 20, in welchem eine um eine zur Zeichenebene von Figur 1, das ist die Querrichtung der Straßengroßfräse 10, orthogonale Fräswalzenachse A drehbare Fräswalze 22 als Arbeitsvorrichtung aufgenommen ist.

Mit der Fräswalze 22 kann der Untergrund U in durch Höhenveränderung des Maschinenrahmens 26 relativ zu den Laufwerken 12 und 14 vorbestimmter Abtragstiefe abgetragen werden. Alternativ oder zusätzlich kann die Fräswalze 22 relativ zu dem Maschinenrahmen 26 höhenverstellbar an diesem aufgenommen sein. Das von der Fräswalze 22 abgetragene Schneidgut wird im Fräswalzenkasten 20 zur Verminderung der Staubbelastung der Umgebung der Straßengroßfräse 10 befeuchtet und durch die in Figur 1 lediglich maschinennah angedeutete Abwurfeinrichtung 24 vor die Straßengroßfräse 10 gefördert. Im Betrieb folgt daher die Straßengroßfräse 10 üblicherweise einem Lastkraftwagen, dessen Ladeeinrichtung sie während ihres den Untergrund U abtragenden Betriebs mit Schüttgut füllt.

Zahlreiche Vorrichtungen an der Straßengroßfräse 10, wie beispielsweise die Höhenverstellung des Maschinenrahmens 26 relativ zu den Laufwerken 12 und 14 oder die Lenkung der Laufwerke 12 und 14 sowie der Vortrieb der Laufwerke 12 und 14, sind durch Hydraulikmotoren bzw. Hydraulikpumpen bewirkt. Die Fräswalze 22 kann dagegen mechanisch durch die im Motorraum 18 aufgenommene Brennkraftmaschine 42 zur Bewegung angetrieben werden. Die Brennkraftmaschine 42 ist Antriebsleistungsquelle sowohl für die mechanisch angetriebene Fräswalze 22 wie auch für die hydraulisch betätigbaren bzw. betreibbaren Vorrichtungen der Straßengroßfräse 10.

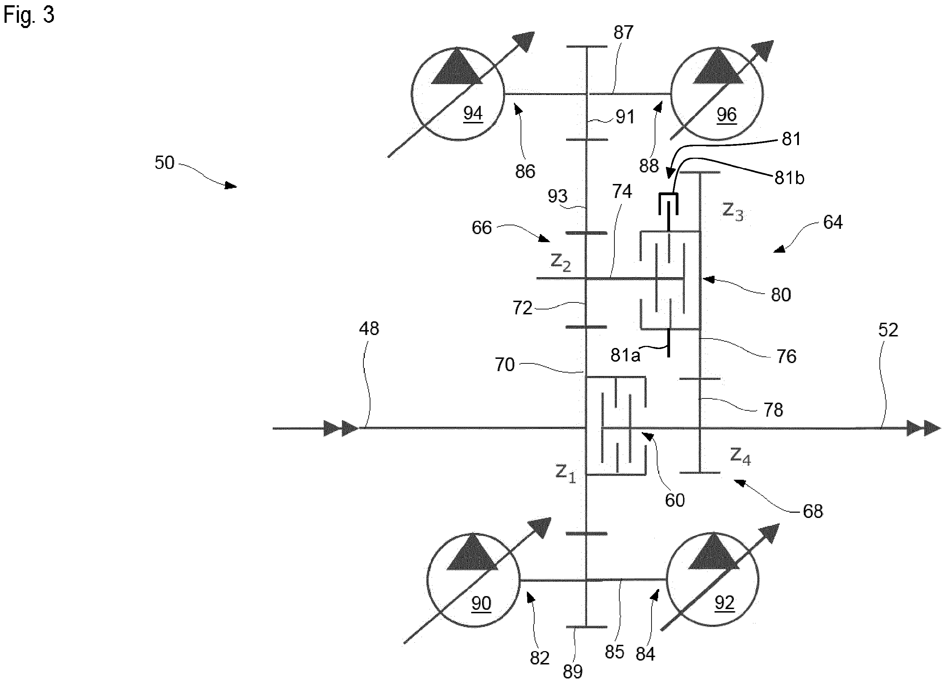

In Figur 2 ist der Antriebsstrang der Arbeitsvorrichtung der Bodenbearbeitungsmaschine 10 von Figur 1 grobschematisch als Blockschaltbild mit Bezugszeichen 40 bezeichnet. Der Antriebsstrang 40 umfasst als Quelle der Antriebsleistung die Brennkraftmaschine 42, beispielsweise in Form einer Diesel-Brennkraftmaschine. Es ist jedoch auch die Verwendung eines Ottomotors als Antriebsmotor nicht ausgeschlossen. Die Antriebswelle 44 der Brennkraftmaschine 42 ist unter Zwischenanordnung einer an sich bekannten elastischen Kupplung 46 mit der Eingangswelle 48 eines weiter unten im Zusammenhang mit Figur 3 detailliert beschriebenen Schaltgetriebes 50 gekoppelt.

Die Verwendung des Schaltgetriebes 50 ermöglicht, die Brennkraftmaschine mit einer optimalen stationären Drehzahl zu betreiben und dennoch die Arbeitsvorrichtung 22, beispielsweise in Form einer Fräswalze oder eines Fräsrotors, mit unterschiedlichen Drehzahlen und mit unterschiedlichen Drehmomenten betreiben zu können. Die stationäre Betriebsdrehzahl der Brennkraftmaschine 42 kann leistungsoptimiert, emmisionsoptimiert oder/und verbrauchsoptimiert gewählt sein.

Eine Ausgangswelle 52 des Schaltgetriebes 50 ist über einen an sich bekannten Riementrieb 54 mit der Eingangsseite einer Planetengetriebeanordnung 56 gekoppelt, welche ausgangsseitig mit der Arbeitsvorrichtung 22 Drehmoment übertragend verbunden ist.

Der Riementrieb 54 weist wenigstens zwei Riemenscheiben auf, von welchen eine zur vorübergehenden Ankopplung eines Hilfsantriebs ausgebildet sein kann, um die Arbeitsvorrichtung 22 zu Wartungs- oder/und Reparaturzwecken mit geringer Geschwindigkeit rotieren zu können.

Die Darstellung in Figur 2 ist - wie oben bereits angemerkt - lediglich ein grobschematisches Blockschaltbild. Tatsächlich kann die Planetengetriebeanordnung 56 wenigstens teilweise oder sogar vollständig im Inneren der Arbeitsvorrichtung 22 angeordnet sein.

Die Arbeitsvorrichtung 22 umfasst im dargestellten Ausführungsbeispiel ein hohlzylindrisches Fräsrohr, an dessen Außenseite Fräsmeißel üblicherweise unter Zwischenanordnung von Meißelhaltern oder Meißelwechselhaltern angeordnet sind. Der vom Fräsrohr umgebene Hohlraum radial innerhalb des Fräsrohrs bietet Raum zur wenigstens teilweisen Aufnahme der Planetengetriebeanordnung 56.

In der Regel findet im Antriebsstrang 40 eine Untersetzung der Drehzahl der Antriebswelle 44 der Brennkraftmaschine 42 statt sowie eine Übersetzung des an der Antriebswelle 44 abgreifbaren Drehmoments. Dies bedeutet, die Arbeitsvorrichtung 22 rotiert um ihre Arbeitsvorrichtungsachse langsamer als die Antriebswelle 44 um ihre Drehachse, jedoch mit - unter Vernachlässigung von unvermeidlichen Verlusten - reziprok größerem Drehmoment.

Während im dargestellten Ausführungsbeispiel der Riementrieb 54 von der Eingangs- zur Ausgangsseite Drehmoment untersetzt und Drehzahl übersetzt, übersetzt die Planetengetriebeanordnung 56 Drehmoment und untersetzt Drehzahl. In dem in Figur 2 gezeigten Beispiel ist die Planetengetriebeanordnung von den drei Drehzahl und Drehmoment wandelnden Vorrichtungen 50, 54 und 56 sogar die einzige, welche Drehzahl untersetzt und Drehmoment übersetzt. Beispielsweise kann im vorliegenden Ausführungsbeispiel das Drehmomentübertragungsverhältnis des Riementriebs von der Eingangsseite zur Ausgangsseite zwischen 0,78 und 0,8 gewählt sein und kann im vorliegenden Ausführungsbeispiel das Drehmomentübertragungsverhältnis der Planetengetriebeanordnung 56 von der Eingangsseite nach der Ausgangsseite etwa 20,5 bis 20,7 betragen.

Die Eingangswelle 48 des Schaltgetriebes 50 bildet genauer einen Hauptantrieb des Schaltgetriebes 50. Ebenso bildet die in Figur 2 dargestellte Ausgangswelle 52 des Schaltgetriebes 50 einen Hauptabtrieb desselben.

In Figur 3 ist das eine erste Ausführungsform des Schaltgetriebes 50 grobschematisch dargestellt.

Wie in Figur 3 dargestellt ist, sind die Eingangswelle 48 und die Ausgangswelle 52 des Schaltgetriebes 50 durch eine Durchtrieb-Kupplung 60 wahlweise miteinander zur gemeinsamen drehzahlgleichen Drehung verbindbar oder voneinander trennbar. Die Durchtrieb-Kupplung kann beispielsweise eine Lamellenkupplung sein. Durch die Durchtrieb-Kupplung 60 kann die Eingangswelle 48 mit der Ausgangswelle 52 des Schaltgetriebes zu einer gemeinsam drehenden Wellenanordnung verbunden werden. Hierdurch wird ein sehr hoher Wirkungsgrad bei der Leistungsübertragung von der Brennkraftmaschine 42 zur Arbeitsvorrichtung 22 erzielt.

Die Durchtrieb-Kupplung 60 bildet eine erste Schaltstufe zur Drehmoment übertragenden Verbindung von Eingangswelle 48 und Ausgangswelle 52. Bei dieser ersten Schaltstufe ist keinerlei Getriebeanordnung an der Übertragung von Antriebsleistung von der Eingangswelle 48 zur Ausgangswelle 52 beteiligt.

Eine zweite Schaltstufe, welche an dem Schaltgetriebe 50 ebenfalls realisierbar ist, umfasst eine Getriebeanordnung 64, welche bei Aktivierung der zweiten Schaltstufe und Deaktivierung der ersten Schaltstufe Antriebsleistung von der Eingangswelle 48 der Ausgangswelle 52 des Schaltgetriebes 50 überträgt.

Die Getriebeanordnung 64 umfasst eine erste, der Eingangsseite näher gelegene Teil-Getriebeanordnung 66 und eine zweite, der Ausgangsseite des Schaltgetriebes 50 näher gelegene Teil-Getriebeanordnung 68.

Jede der beiden Teil-Getriebeanordnungen 66 und 68 umfasst im dargestellten erfindungsgemäßen Ausführungsbeispiel genau eine Zahnradpaarung.

Die erste Teil-Getriebeanordnung 66 umfasst das Antriebsritzel 70, welches mit einem Abtriebsritzel 72 der ersten Teil-Getriebeanordnung kämmt. Das Abtriebsritzel 72 ist im dargestellten Beispiel zur gemeinsamen Drehung an einer Vorgelegewelle 74 angeordnet.

Die Zähnezahl des Antriebsritzels 70 sei z₁ und die Zähnezahl des Abtriebsritzel 72 sei z₂, wobei ausweislich Figur 3 gilt: z₁ > z₂.

Die Vorgelegewelle 74 trägt weiter das Antriebsritzel 76 der zweiten Teil-Getriebeanordnung, welches mit dem Abtriebsritzel 78 der zweiten Teil-Getriebeanordnung auf der Ausgangswelle 52 kämmt.

Das Abtriebsritzel 78 ist in der dargestellten Ausführungsform fest mit der Ausgangswelle 52 des Schaltgetriebes 50 zur gemeinsamen drehzahlgleichen Drehung mit diesem verbunden. Das Antriebsritzel 76 der zweiten Teil-Getriebeanordnung ist im dargestellten Beispiel über eine Vorgelege-Kupplung 80 wahlweise mit der Vorgelegewelle 74 zur gemeinsamen Drehung verbindbar oder von dieser trennbar.

Die Vorgelege-Kupplung 80 kann wiederum eine Lamellenkupplung sein.

Abweichend von der Darstellung von Figur 3 kann die Vorgelegewelle 74 auch als geteilte Vorgelegewelle ausgeführt sein, wobei dann das Antriebsritzel 76 fest mit der Abtriebsseite der Vorgelegewelle 74 gekoppelt sein kann und wobei die Antriebs- und die Abtriebsseite der dann geteilten Vorgelegewelle durch die Vorgelege-Kupplung 80 zur gemeinsamen Drehung miteinander verbindbar oder voneinander trennbar sind.

Das Antriebsritzel 76 der zweiten Teil-Getriebeanordnung weist eine Zähnezahl z₃ auf, welche größer ist als die Zähnezahl z₄ des Abtriebsritzels 78 der zweiten Teil-Getriebeanordnung 68.

Die Zähnezahlen z₁, z₂, z₃ und z₄ sind dabei so gewählt, dass sich die Zähnezahlen ähnlich großer Ritzel, also beispielsweise die Zähnezahlen z₁ und z₃ der beiden Antriebsritzel 70 und 76, ebenso um nicht mehr als zwei Zähne voneinander unterscheiden, wie auch die Zähnezahlen z₂ und z₄ der ähnlich großen Abtriebsritzel 72 und 78. Es gilt dann, dass sich die Übertragungsverhältnisse der beiden Teil-Getriebeanordnungen 66 und 68 um nicht mehr als 1 % unterscheiden können, sodass bei einem angenommenen Gesamtübertragungsverhältnis j der Getriebeanordnung 64 näherungsweise gilt, dass jedes Übertragungsverhältnis der Teil-Getriebeanordnungen 66 und 68 etwa die Quadratwurzel von j ist. Dadurch treten an den Kämmeingriffsstellen der jeweiligen Teil-Getriebeanordnungen, also zwischen den Ritzeln 70 und 72 einerseits und zwischen den Ritzeln 76 und 78 andererseits in etwa gleich große Kräfte auf, die zwischen den Ritzeln übertragen werden, was zu einer gleichmäßigen Belastung beider Teil-Getriebeanordnungen und damit zu einem einheitlichen Verschleißverhalten der gesamten Getriebeanordnung 64 führt.

Mit der gezeigten Anordnung von Durchtrieb-Kupplung 60 und Vorgelege-Kupplung 80 kann das Schaltgetriebe 50 in vorteilhafter Weise unter Last zwischen seinen beiden Schaltstufen geschaltet werden. Es kann daher ohne Lastunterbrechung zwischen dem Durchtrieb und dem von der Getriebeanordnung 64 bereitgestellten Übertragungsverhältnis gewechselt werden.

Zur sicheren Stilllegung der Arbeitsvorrichtung dann, wenn beide Kupplungen: Durchtrieb-Kupplung 60 und Vorgelege-Kupplung 80, gelüftet sind, weist das Schaltgetriebe 50 bevorzugt eine Bremsvorrichtung 81 auf, welche in der vorliegenden Ausführungsform mit der Abtriebsseite der Vorgelege-Kupplung 80 zusammenwirkt. Hierzu kann an der Abtriebsseite der Vorgelege-Kupplung 80 eine Bremsscheibe 81a vorgesehen sein, auf die Bremskraft von einem Bremssattel 81b der Bremsvorrichtung 81 ausgeübt werden kann.

Lediglich der Vollständigkeit halber sei erwähnt, dass das Schaltgetriebe 50 vier weitere Nebenabtriebe 82, 84, 86, 88 aufweist.

Mit den Nebenabtrieben 82, 84, 86, 88 sind jeweils Hydraulikpumpen 90, 92, 94, 96 gekoppelt. Das Schaltgetriebe 50 ist somit im vorliegenden Fall ein Pumpenverteilergetriebe.

Im dargestellten Beispiel liegen die Nebenabtriebe 82 und 84 auf einer gemeinsamen ersten Nebenabtriebswelle 85. Die Nebenabtriebe 86 und 88 liegen auf einer gemeinsamen zweiten Nebenabtriebswelle 87.

Die erste Nebenabtriebswelle 85 ist durch ein Nebenabtriebsritzel 89 zur Drehung angetrieben, welches zur gemeinsamen Drehung mit der ersten Nebenabtriebswelle 85 verbunden ist und welches mit dem Antriebsritzel 70 der ersten Teil-Getriebeanordnung 66 dauerhaft kämmt.

Auch die zweite Nebenabtriebswelle 87 weist ein drehfest mit ihr zur gemeinsamen Drehung verbundenes zweites Nebenabtriebsritzel 91 auf. Dieses ist mittelbar unter Zwischenanordnung eines Zwischenritzels 93 vom Abtriebsritzel 72 der ersten Teil-Getriebeanordnung 66 zur Drehung angetrieben. Somit ist sichergestellt, dass die erste und die zweite Nebenabtriebswelle 85 bzw. 87 im gleichen Drehsinn drehen. Außerdem ist sichergestellt, dass unabhängig von den Schaltzuständen der Durchtrieb-Kupplung 60 und der Vorgelege-Kupplung 80 stets Drehmoment sowohl zur ersten Nebenabtriebswelle 85 wie zur zweiten Nebenabtriebswelle 87 übertragen werden.

Eine Steuervorrichtung des Schaltgetriebes 50 sorgt für einen Ausschluss kritischer Betriebszustände, wie etwa ein gleichzeitiger Drehmoment-Übertragungseingriff sowohl der Durchtrieb-Kupplung 60 als auch der Vorgelege-Kupplung 80 oder ein Bremseingriff der Bremsvorrichtung 81, wenn nicht sowohl die Durchtrieb-Kupplung 60 als auch die Vorgelege-Kupplung 80 gelüftet sind. Die Steuervorrichtung des Schaltgetriebes 50 kann durch eine Maschinensteuervorrichtung der Bodenbearbeitungsmaschine 10 realisiert sein oder kann eine hiervon gesonderte Steuervorrichtung sein, etwa jeweils unter Verwendung von Mikroprozessoren oder/und speicherprogrammierbaren Steuerungen, wie sie im Stand der Technik bekannt sind.

Abweichend von der Darstellung der Figur 3 kann auch ein von der Eingangswelle stets zur Drehung angetriebener Teil der Vorgelegewelle 74 als zusätzlicher oder alternativer Nebenabtrieb aus einem Gehäuse des Schaltgetriebes 50 herausgeführt sein.

Von den beiden Kupplungen: Durchtrieb-Kupplung 60 und Vorgelege-Kupplung 80, kann jeweils nur eine zur Drehmomentübertragung aktiviert sein, während die andere deaktiviert sein muss. Möglich ist es jedoch, beide Kupplungen 60 und 80 gleichzeitig zu deaktivieren, wenn etwa nur Drehmoment an den Nebenabtrieben benötigt wird, jedoch nicht am Hauptabtrieb.

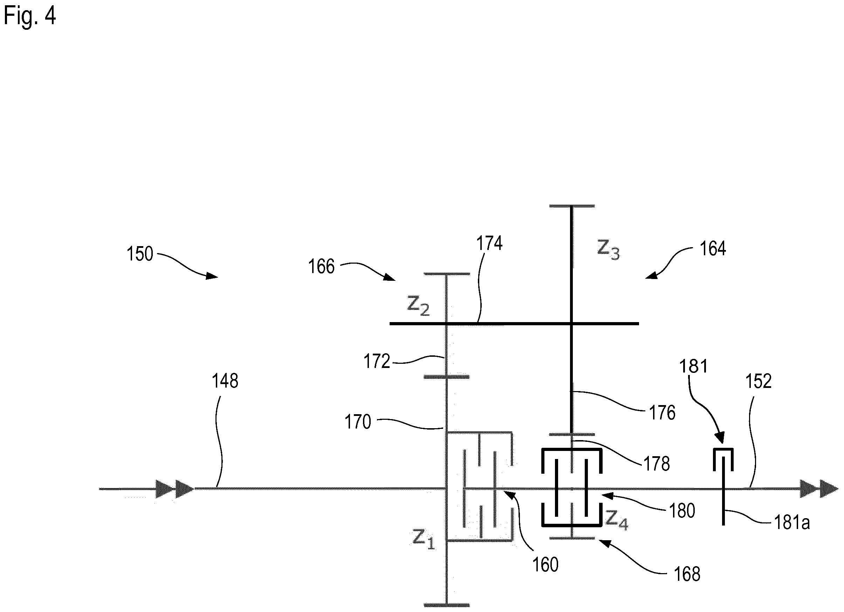

In der Figur 4 ist eine zweite Ausführungsform eines erfindungsgemäßen Schaltgetriebes dargestellt. Gleiche und funktionsgleiche Bauteile und Bauteilabschnitte wie in Figur 3 sind in Figur 4 mit gleichen Bezugszeichen versehen, jedoch erhöht um die Zahl 100. Die zweite Ausführungsform von Figur 4 wird nachfolgend nur insofern beschrieben, wie sie sich von der ersten Ausführungsform von Figur 3 unterscheidet, auf deren Beschreibung ansonsten auch zur Erläuterung der zweiten Ausführungsform von Figur 4 verwiesen wird.

Das Schaltgetriebe 150 von Figur 4 weist keinerlei Nebenantriebe auf, sondern nur den Hauptantrieb durch die Eingangswelle 148 und den Hauptabtrieb über die Ausgangswelle 152.

Außerdem ist in Figur 4 die Vorgelege-Kupplung 180 lediglich zur Darstellung der konstruktiven Möglichkeiten nicht an der Vorgelegewelle 174, sondern an der Ausgangswelle 152 angeordnet. Die Vorgelege-Kupplung 180 dient dazu, das Abtriebsritzel 178 der zweiten Teil-Getriebeanordnung 164 wahlweise mit der Ausgangswelle 152 zu verbinden oder von dieser zu trennen.

Trotz der Anordnung der Vorgelege-Kupplung 180 an der Ausgangswelle 152 des Schaltgetriebes 150 ist diese eine Vorgelege-Kupplung 180 im Sinne der vorliegenden Anmeldung, da sie im Drehmoment-Übertragungspfad der Getriebeanordnung 168 angeordnet ist und eine Unterbrechung oder Herstellung einer Übertragung eines Drehmoments von der Eingangswelle 148 zur Ausgangswelle 152 über die Vorgelegewelle 174 ermöglicht.

Die Bremsvorrichtung 181 wirkt in dieser zweiten Ausführungsform mit der Ausgangswelle 152 zusammen, die eine Bremsscheibe 181 zur gemeinsamen Drehung mit sich lagert.

## Patentansprüche

1. Bodenbearbeitungsmaschine (10), umfassend einen Antriebsmotor (42) und einem von dem Antriebsmotor (42) zu einer rotierenden Bewegung antreibbaren Bodenmaterial abtragenden Fräswerkzeug als einer Arbeitsvorrichtung (22), wobei der Antriebsmotor (42) mit der Arbeitsvorrichtung (22) unter Zwischenanordnung eines wenigstens zwei Schaltstufen unterschiedlicher Drehmoment-Übertragungsverhältnisse aufweisenden Schaltgetriebes (50; 150) zur Übertragung eines Drehmoments verbunden ist,
**dadurch gekennzeichnet, dass** mittels einer ersten Schaltstufe des Schaltgetriebes (50; 150) eine eingangsseitig mit dem Antriebsmotor (42) gekoppelte Eingangswelle (48; 148) des Schaltgetriebes (50; 150) unmittelbar mit einer ausgangsseitig mit der Arbeitsvorrichtung (22) gekoppelten Ausgangswelle (52; 152) des Schaltgetriebes (50; 150) zur gemeinsamen drehzahlgleichen Drehbewegung Drehmoment übertragend verbindbar ist, und dass mittels einer zweiten Schaltstufe des Schaltgetriebes (50; 150) die Eingangswelle (48; 148) unter Zwischenanordnung einer Getriebeanordnung (64; 164) mit der Ausgangswelle (52; 152) zur gemeinsamen drehzahlverschiedenen Drehbewegung Drehmoment übertragend verbindbar ist, wobei die Bodenbearbeitungsmaschine (10) im Drehmomentübertragungspfad von einschließlich dem Schaltgetriebe (50; 150) bis zu einschließlich der Arbeitsvorrichtung (22) eine Bremsvorrichtung (81; 181) aufweist, durch welche die Arbeitsvorrichtung (22) bei unterbrochenem Drehmomentübertragungspfad stillsetzbar ist.

2. Bodenbearbeitungsmaschine (10) nach Anspruch 1,
**dadurch gekennzeichnet, dass** die erste Schaltstufe eine Durchtrieb-Kupplung (60; 160) umfasst, mit welcher die Eingangswelle (48; 148) abhängig vom Schaltzustand der Durchtrieb-Kupplung (60; 160) unmittelbar mit der Ausgangswelle (52; 152) zur gemeinsamen drehzahlgleichen Drehung verbindbar ist oder von der Ausgangswelle (52; 152) trennbar ist.

3. Bodenbearbeitungsmaschine (10) nach Anspruch 1 oder 2,
**dadurch gekennzeichnet, dass** die zweite Schaltstufe eine Vorgelegewelle (74; 174) umfasst, welche mit der Eingangswelle (48; 148) über eine erste Teil-Getriebeanordnung (66; 166) der Getriebeanordnung (64; 164) verbunden ist und welche mit der Ausgangswelle (52; 152) über eine zweite Teil-Getriebeanordnung (68; 168) der Getriebeanordnung (64; 164) verbunden ist, wobei die zweite Schaltstufe weiter eine Vorgelege-Kupplung (80; 180) umfasst, mit welcher eine Drehmomentübertragung von der Eingangswelle (48; 148) zur Ausgangswelle (52; 152) über die Vorgelegewelle (74; 174), insbesondere zwischen der Vorgelegewelle (74; 174) und der Eingangswelle (48; 148) oder/und der Ausgangswelle (52; 152), abhängig vom Schaltzustand der Vorgelege-Kupplung (80; 180) herstellbar oder unterbrechbar ist.

4. Bodenbearbeitungsmaschine (10) nach Anspruch 3,
**dadurch gekennzeichnet, dass** die erste Teil-Getriebeanordnung (66; 166) und die zweite Teil-Getriebeanordnung (68; 168) jeweils ein von 1 verschiedenes Übertragungsverhältnis aufweisen.

5. Bodenbearbeitungsmaschine (10) nach Anspruch 4,
**dadurch gekennzeichnet, dass** sich das Übertragungsverhältnis der ersten Teil-Getriebeanordnung (66; 166) und das Übertragungsverhältnis der zweiten Teil-Getriebeanordnung (68; 168) bezogen auf das größere der beiden Übertragungsverhältnisse um nicht mehr als 3 %, bevorzugt um nicht mehr als 1,5 %, besonders bevorzugt um nicht mehr als 0,75 % unterscheiden.

6. Bodenbearbeitungsmaschine (10) nach einem der Ansprüche 3 bis 5,
**dadurch gekennzeichnet, dass** die erste Teil-Getriebeanordnung (66; 166) eine erste Zahnradpaarung (70/72; 170/172) ist und dass die zweite Teil-Getriebeanordnung (68; 168) eine zweite Zahnradpaarung (76/78; 176/178) ist.

7. Bodenbearbeitungsmaschine (10) nach den Ansprüchen 5 und 6,
**dadurch gekennzeichnet, dass** sich die Zähnezahlen der kleineren Zahnräder (72, 78; 172, 178) der ersten (70/72; 170/172) und der zweiten Zahnradpaarung (76/78; 176/178) um nicht mehr als zwei Zähne, unterscheiden und dass sich die Zähnezahlen der größeren Zahnräder (70, 76; 170, 176) der ersten (70/72; 170/172) und der zweiten Zahnradpaarung (76/78; 176/178) um nicht mehr als zwei Zähne unterscheiden.

8. Bodenbearbeitungsmaschine (10) nach einem der vorhergehenden Ansprüche,
**dadurch gekennzeichnet, dass** das Schaltgetriebe (50; 150) wenigstens einen, vorzugsweise mehr als einen Nebenabtrieb (82, 84, 86, 88) aufweist.

9. Bodenbearbeitungsmaschine (10) nach Anspruch 8, unter Einbeziehung eines der Ansprüche 3 bis 7,
**dadurch gekennzeichnet, dass** alle Nebenabtriebe (82, 84, 86, 88) des Schaltgetriebes (50) über dieselbe Teil-Getriebeanordnung (66) zur Drehung angetrieben sind.

10. Bodenbearbeitungsmaschine (10) nach einem der vorhergehenden Ansprüche,
**dadurch gekennzeichnet, dass** die Ausgangswelle (52; 152) unter Zwischenanordnung wenigstens eines weiteren Getriebes (54, 56), bevorzugt von wenigstens zwei Getrieben (54, 56), besonders bevorzugt von einem Riementrieb (54) und einer Planetengetriebeanordnung (56), mit der Arbeitsvorrichtung (22) Drehmoment übertragend gekoppelt ist.

## Claims

1. An earth working machine (10), encompassing a drive motor (42) and a soil removing milling tool as a working apparatus (22) drivable by the drive motor (42) so as to move rotationally, the drive motor (42) being connected to the working apparatus (22), for transfer of a torque, with interposition of a shiftable transmission (50; 150) comprising at least two gearing stages having different torque transfer ratios,
**characterized in that** by means of a first gearing stage of the shiftable transmission (50; 150), an input shaft (48; 148), coupled on the input side to the drive motor (42), of the shiftable transmission (50; 150) is connectable in torque-transferring fashion directly to an output shaft (52; 152), coupled on the output side to the working apparatus (22), of the shiftable transmission (50; 150) so as to move rotationally together at the same rotation speed; and by means of a second gearing stage of the shiftable transmission (50; 150), the input shaft (48; 148) is connectable in torque-transferring fashion, with interposition of a transmission assemblage (64; 164), to the output shaft (52; 152) so as to rotate together at different rotation speeds, wherein the earth working machine (10) comprises a braking apparatus (81; 181) in the torque transfer path from including the shiftable transmission (50; 150) to including the working apparatus (22) with which the working apparatus (22) can be brought to a stop when the torque transfer path is interrupted.

2. The earth working machine (10) according to Claim 1,
**characterized in that** the first gearing stage encompasses a direct-drive clutch (60; 160) with which, depending on the engagement state of the direct-drive clutch (60; 160), the input shaft (48; 148) is connectable directly to the output shaft (52; 152) so as to rotate together at the same rotation speed, or is disconnectable from the output shaft (52; 152).

3. The earth working machine (10) according to Claim 1 or 2,
**characterized in that** the second gearing stage encompasses an intermediate shaft (74; 174) that is connected to the input shaft (48; 148) via a first transmission sub-assemblage (66; 166) of the transmission assemblage (64; 164) and is connected to the output shaft (52; 152) via a second transmission sub-assemblage (68; 168) of the transmission assemblage (64; 164), the second gearing stage furthermore encompassing an intermediate clutch (80; 180) with which a torque transfer from the input shaft (48; 148) to the output shaft (52; 152) via the intermediate shaft (74; 174), in particular between the intermediate shaft (74; 174) and the input shaft (48; 148) and/or the output shaft (52; 152), can be established or interrupted depending on the engagement state of the intermediate clutch (80; 180).

4. The earth working machine (10) according to Claim 3,
**characterized in that** the first transmission sub-assemblage (66; 166) and the second transmission subassemblage (68; 168) each have a transfer ratio differing from 1.

5. The earth working machine (10) according to Claim 4,
**characterized in that** the transfer ratio of the first transmission sub-assemblage (66; 166) and the transfer ratio of the second transmission sub-assemblage (68; 168) differ, based on the greater of the two transfer ratios, by no more than 3%, preferably by no more than 1.5%, particularly preferably by no more than 0.75%.

6. The earth working machine (10) according to one of Claims 3 to 5,
**characterized in that** the first transmission sub-assemblage (66; 166) is a first gear pair (70/72; 170/172); and the second transmission sub-assemblage (68; 168) is a second gear pair (76/78; 176/178).

7. The earth working machine (10) according to Claims 5 and 6,
**characterized in that** the tooth counts of the smaller gears (72, 78; 172, 178) of the first (70/72; 170/172) and the second gear pair (76/78; 176/178) differ by no more than two teeth; and the tooth counts of the larger gears (70, 76; 170, 176) of the first (70/72; 170/172) and the second gear pair (76/78; 176/178) differ by no more than two teeth.

8. The earth working machine (10) according to one of the preceding claims,
**characterized in that** the shiftable transmission (50; 150) comprises at least one, preferably more than one, power takeoff (82, 84, 86, 88).

9. The earth working machine (10) according to Claim 8 incorporating one of Claims 3 to 7,
**characterized in that** all the power takeoffs (82, 84, 86, 88) of the shiftable transmission (50) are rotationally driven via the same transmission subassemblage (66).

10. The earth working machine (10) according to one of the preceding claims,
**characterized in that** the output shaft (52; 152) is coupled in torque-transferring fashion to the working apparatus (22) with interposition of at least one further transmission (54, 56), preferably of at least two transmissions (54, 56), particularly preferably of a belt drive (54) and a planetary gearset assemblage (56).

## Revendications

1. Machine de traitement du sol (10), comprenant un moteur d'entraînement (42) et un outil de fraisage enlevant de la matière du sol, qui peut être entraînée par le moteur d'entraînement (42) à un mouvement rotatif, comme dispositif de travail (22), le moteur d'entraînement (42) étant relié au dispositif de travail (22) en interposant une transmission (50; 150) comprenant au moins deux rapports de transmission avec des conditions de transmission de couple différentes pour la transmission d'un couple,
**caractérisé en ce qu'**au moyen d'un premier rapport de transmission de la transmission (50; 150) un arbre d'entrée (48; 148) de la transmission (50; 150) couplé côté entrée au moteur d'entraînement (42) peut être relié directement à un arbre de sortie (52) de la transmission (50; 150) couplé côté sortie au dispositif de travail (22) pour un mouvement rotatif commun à la même vitesse transmettant un couple, et **en ce qu'**au moyen d'un deuxième rapport de transmission de la transmission (50; 150) l'arbre d'entrée (48; 148) peut être relié à l'arbre de sortie (52; 152) en interposant un arrangement de transmission (64; 164) pour un mouvement rotatif commun à une vitesse différente transmettant un couple, la machine de traitement du sol (10) comportant un dispositif de freinage (81; 181) dans le trajet de transmission du couple depuis la transmission (50; 150) jusqu'au dispositif de travail (22), au moyen duquel le dispositif de travail (22) peut être arrêté lorsque le trajet de transmission du couple est interrompu.

2. Machine de traitement du sol (10) selon la revendication 1,
**caractérisée en ce que** le premier niveau de vitesse comprend un embrayage de passage (60; 160) par lequel l'arbre d'entrée (48; 148) peut, en fonction de l'état de commutation de l'embrayage de passage (60; 160),
être relié directement à l'arbre de sortie (52; 152) pour une rotation commune à la même vitesse ou peut être séparé de l'arbre de sortie (52; 152).

3. Machine de traitement du sol (10) selon la revendication 1 ou 2,
**caractérisée en ce que** le deuxième niveau de vitesse comprend un arbre de renvoi (74; 174) qui est relié à l'arbre d'entrée (48; 148) par un premier arrangement de transmission partiel (66; 166) de l'arrangement de transmission (64; 164), et qui est relié à l'arbre de sortie (52; 152) par un deuxième arrangement de transmission partiel (68; 168) de l'arrangement de transmission (64; 164), le deuxième niveau de vitesse comprenant en outre un embrayage d'arbre de renvoi (80; 180) avec lequel une transmission de couple de l'arbre d'entrée (48; 148) à l'arbre de sortie (52; 152) via l'arbre de renvoi (74; 174), en particulier entre l'arbre de renvoi (74; 174) et l'arbre d'entrée (48; 5 148) et/ou l'arbre de sortie (52; 152) peut être réalisée ou interrompue en fonction de l'état de commutation de l'embrayage d'arbre de renvoi (80; 180).

4. Machine de traitement du sol (10) selon la revendication 3,
**caractérisée en ce que** le premier arrangement de transmission partielle (66; 166) et le deuxième arrangement de transmission partielle (68; 168) ont chacun un rapport de transmission différent de 1.

5. Machine de traitement du sol (10) selon la revendication 4,
**caractérisée en ce que** le rapport de transmission du premier arrangement de transmission partiel (66; 166) et le rapport de transmission du deuxième arrangement de transmission partielle (68; 168) diffèrent de pas plus de 3%, de préférence de pas plus de 1,5%, en particulier de pas plus de 0,75% par rapport au plus grand des deux rapports de transmission.

6. Machine de traitement du sol (10) selon l'une des revendications 3 à 5,
**caractérisée en ce que** le premier arrangement de transmission partiel (66; 166) est une première paire de roues dentées (70/72; 170/172) et **en ce que** le deuxième arrangement de transmission partielle (68; 168) est une deuxième paire de roues dentées (76/78; 176/178).

7. Machine de traitement du sol (10) selon les revendications 5 et 6,
**caractérisée en ce que** le nombre de dents des petites roues dentées (72, 78; 172, 178) du premier (70/72; 170/172) et du deuxième paire de roues dentées (76/78; 176/178) est différent de pas plus de deux dents, et que le nombre de dents des plus grandes roues dentées (70, 76; 170, 176) de la première (70/72; 170/172) et de la deuxième paire (76/78; 176/178) n'est diffèrent de pas plus de deux dents.

8. Machine de traitement du sol (10) selon l'une des revendications précédentes,
**caractérisée en ce que** la transmission (50; 150) comporte au moins un, de préférence plus d'un arbre de prise de force (82, 84, 86, 88).

9. Machine de traitement du sol (10) selon la revendication 8, y compris une des revendications 3 à 7,
**caractérisée en ce que** tous les arbres de prise de force (82, 84, 86, 88) de la transmission (50) sont entraînés en rotation par le même arrangement de transmission partiel (66).

10. Machine de traitement du sol (10) selon l'une des revendications précédentes,
**caractérisée en ce que** l'arbre de sortie (52; 152) est couplé au dispositif de travail (22) de manière à transmettre un couple en interposant au moins une autre transmission (54, 56), de préférence au moins deux transmissions (54, 56), notamment de préférence un entraînement par courroie (54) et un arrangement à engrenage planétaire (56).
